# EUROPEAN PATENT APPLICATION

(11) **EP 4 756 736 A1**
(43) Date of publication of application: **10.06.2026**
(21) Application number: 24307046.3
(22) Date of filing: 06.12.2024
(51) Int. Cl.: G06V 10/774, G06V 10/82

(54) **METHOD FOR SELECTING IMAGES IN A VIDEO SEQUENCE**

(71) Applicant: BULL SAS, 78340 Les Clayes-Sous-Bois (FR)
(72) Inventor: FERRANDO DEL RINCON, German, 28006 Madrid (ES); MORIN, Guillaume, 38000 Grenoble (FR); WINCKLER, Nicolas, 38190 Villard Bonnot (FR)
(74) Representative: IPAZ

(57) **Abstract**

The invention relates to a method (20) for selecting images in a series of images, comprising:
- providing each image to a computer vision model, an output of the computer vision model being representative of each detected object in said image;
- providing each image and a respective previous image to an optical flow algorithm, an output of the optical flow algorithm being representative of each detected moving object in said image;
- comparing the output of the computer vision model to the output of the optical flow algorithm;
- based on a result of the comparison, identifying each image of the series of images that comprises a moving object that has been detected by the optical flow algorithm but has not been detected by the computer vision model; and
- storing each identified image in an image set.

## Description

### Field of the invention

The present invention relates to a computer-implemented method for selecting images in a series of images.

The invention further relates to a computer program.

The invention also relates to a computing system.

The invention applies to the field of computer science, and more specifically to the improvement of computer vision models.

### Background

Deep learning-based artificial intelligence models increasingly require large amounts of data to improve performance. In the field of computer vision, this data is primarily composed of images. These images can be sourced from specifically designed datasets, synthetically generated using generative models, or extracted from video sequences.

However, a major challenge arises when extracting images from video sequence. Indeed, extracting every image results in highly voluminous datasets, many of which contain redundant images that offer little to no new information. This redundancy significantly increases both the training time and the costs associated with labelling, particularly when human annotation is involved. Moreover, the energy consumption required for processing such large datasets also becomes a critical factor.

To overcome these drawbacks, it has been suggested to sample data based on statistical approaches such as importance-based sampling, which assigns weights according to specific criteria (*e.g*., uncertainty, rarity, etc.). Sampling may also be performed to select the images that are deemed the most representative (*i.e*., informative) within a video sequence.

However, such methods are not fully satisfactory.

Indeed, these methods fail to consider the temporal nature of video data. Consequently, they may miss scenarios where a detection problem evolves over consecutive images, such as objects appearing or disappearing.

Moreover, since importance-based sampling methods heavily rely on confidence scores, they may fail to capture systematic errors where the model is confident but incorrect. This situation may appear in real-world cases where detection errors arise in low-contrast or occluded scenes, regardless of uncertainty metrics.

Furthermore, since these methods use pre-defined metrics such as uncertainty or rarity, they may fail to sample images that present novel or unexpected detection issues. Similarly, sampling only the most informative images may lead to missing images that capture rare but important cases, and that may be critical for improving generalization for a computer vision model, such as an object detection model.

A purpose of the present invention is to overcome at least one of these drawbacks.

Another purpose of the invention is to provide a method for selecting images in a video sequence that does not rely on a confidence of a computer vision model in its outputs when provided with said video sequence as input.

### Summary of the invention

To this end, the present invention concerns a method of the aforementioned type, comprising a detection-based filtering step including:
- for each image of the series of images, providing said image to a computer vision model, an output of the computer vision model being representative of each object detected by said computer vision model in said image;
- for each image of the series of images, providing said image and a respective previous image to an optical flow algorithm, an output of the optical flow algorithm being representative of each moving object detected by said optical flow algorithm in said image;
- comparing the output of the computer vision model to the output of the optical flow algorithm;
- based on a result of the comparison, identifying each image of the series of images that comprises a moving object that has been detected by the optical flow algorithm but has not been detected by the computer vision model; and
- storing each identified image in an image set.

Indeed, the claimed method allows to evaluate images based on detection performance issues using optical flow. The detection-based filtering step therefore allows to identify, in a simple manner, and without relying on the confidence of the computer vision model, the images that lead to detection issues. Consequently, images identified as problematic can then be selected as candidates to further improve the computer vision model.

According to other advantageous aspects of the invention, the method includes one or several of the following features, taken alone or in any technically possible combination:

the computer vision model is an object detection model, the step of comparing comprising:
- for each object detected by the computer vision model, performing segmentation of the image based on a respective bounding box output by said computer vision model, so as to compute a corresponding segmentation mask;
- determining whether the computed segmentation mask overlaps with a moving object detected by the optical flow algorithm;

the method further comprises, prior to the motion-based filtering step, a semantics-based filtering step including:
- providing the series of images as input to a clustering algorithm configured to:
   - compute, for each image of an input series of images, a corresponding embedding in a predetermined vector space, each embedding being representative of a semantic meaning of a scene shown in said image;
   - perform clustering of the computed embeddings, each cluster comprising embedding associated with images that are semantically related to one another;
- selecting at least one image from at least one cluster based on a predetermined selection rule; and
- updating the series of images based on each selected image;

the selection rule includes selecting each image so that a distribution of the selected images matches a distribution of the images across the determined clusters;

the method further comprises, prior to the detection-based filtering step, a context-based filtering step including:
- using a visual question answering model, identifying each image of the series of images showing a scene that does not correspond to a predetermined operational context;
- updating the series of images by removing each identified image;

the method further comprises training the computer vision model based on the image set.

According to another aspect of the same invention, it is proposed a computer program comprising instructions, which when executed by a computer, cause the computer to carry out the steps of the method as defined above.

The computer program may be in any programming language such as C, C++, JAVA, Python, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a smartphone, a tablet, a computer, a server, etc.

According to another aspect of the same invention, it is proposed a computing system for selecting images in a series of images, the computing system being configured to:
- for each image of the series of images, provide said image to a computer vision model, an output of the computer vision model being representative of each object detected by said computer vision model in said image;
- for each image of the series of images, provide said image and a respective previous image to an optical flow algorithm, an output of the optical flow algorithm being representative of each moving object detected by said optical flow algorithm in said image;
- compare the output of the computer vision model to the output of the optical flow algorithm;
- based on a result of the comparison, identify each image of the series of images that comprises a moving object that has been detected by the optical flow algorithm but has not been detected by the computer vision model; and
- store each identified image in an image set.

The system may be a personal device such as a smartphone, a tablet, a smartwatch, a computer, any wearable electronic device, etc.

The system according to the invention may execute one or several applications to carry out the method according to the invention.

The system according to the invention may be loaded with, and configured to execute, the computer program according to the invention.

### Brief description of the drawings

Other advantages and characteristics will become apparent on examination of the detailed description of an embodiment which is in no way limitative, and the attached figures, where:
figure 1 is a schematic representation of a computing system according to the invention; and
figure 2 is a flowchart of a image selection method performed by the computing system of figure 1.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

### Detailed description

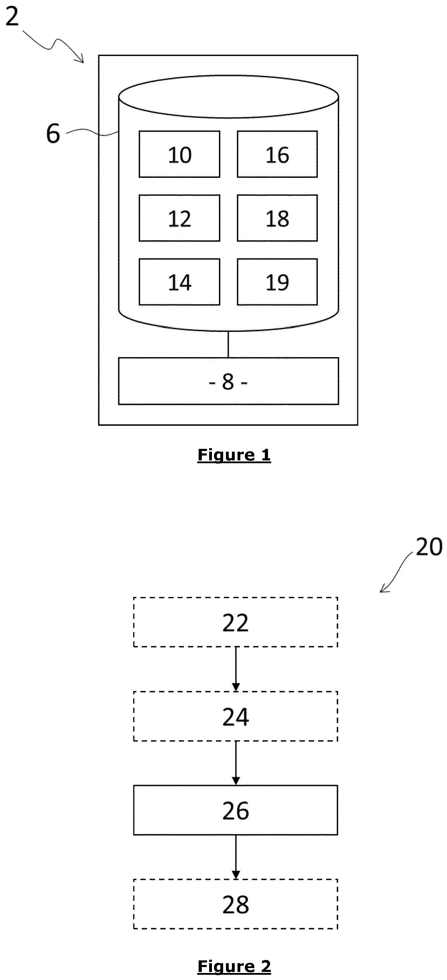

A computing system 2 according to the invention is shown on figure 1.

The computing system 2 is configured to perform an image selection method 20 (figure 2) intended to select images in at least one video sequence to build an image set for training, and more specifically fine-tuning, a computer vision model.

The computing system 2 includes a memory 6 and processing unit 8.

The memory 8 is configured to store a computer vision model 10.

For instance, the computer vision model 10 is an object detection algorithm. In this case, the computer vison model 10 is, for instance, a zero-shot detector or closed vocabulary detector.

The computer vision model 10 is configured to accept, as inputs, an image and one or more classes. Moreover, the computer vision model 10 is configured to provide, as output, information about the location of the detected objects in the input image.

As an example, the computer vision model 10 is configured to receive, as inputs, an image and the class "individual", and to provide, as output, a bounding box of each person detected in the image. Commonly used models for this task are YOLO (You Only Look Once"), RT-DETR (Real-Time Detection Transformer) or Grounding DINO, which are known to the person skilled in the art.

Furthermore, the memory 8 is configured to store an optical flow algorithm 12 and at least one series of images 14, each forming a video sequence.

Preferably, the memory 8 is configured to further store a visual question answering model 16 (later referred to as "VQA model") and/or a clustering algorithm 18.

Furthermore, the memory is configured to store an image set 19.

The processing unit 8 is further configured to carry out the steps of the image selection method 20 for each ordered series of images 14 (i.e., sorted by increasing timestamp), as will be described below. In the following, the ordered series of images 14 will simply be referred to as "series of images".

As mentioned above, the image selection method 20 is designed for building, starting from the series of images 14, the image set 19 for training the computer vision model 10 with the aim of improving its performance towards object detection task.

More precisely, the image selection method 20 preferably includes an optional context-based filtering step 22.

Preferably, the image selection method 20 also includes an optional semantics-based filtering step 24.

Moreover, the image selection method 20 comprises a detection-based filtering step 26.

Advantageously, the image selection method 20 also includes a training step 28.

### Context-based filtering step 22

Advantageously, for each series of images 14, the processing unit 8 is configured to provide, during the context-based filtering step 22, said series of images 14 as input to the VQA model 16.

Such VQA model operates based on a vision-language model adapted to answer visual questions, that is to say questions (such as yes/no questions) relating to the content of an image.

For instance, the VQA model is Molmo-72B, as described by Matt Deitke et al. in the digital prepublication *"Molmo and PixMo: Open Weights and Open Data for State-of-the-Art Multimodal Models",* referenced arXiv:2409.17146.

More precisely, the processing unit 8 is configured to provide the series of images 14 to the VQA model 16 to identify each associated image having a content that does not satisfy a predetermined operational context. Each predetermined operational context may have been previously set by an operator.

Moreover, the processing unit 8 is configured to update the series of images 14 based on an output of the VQA model 16. Preferably, the processing unit 8 is configured to update the series of images 14 by removing each identified image.

This step is advantageous, as it allows to retain only images corresponding to situations that the computer vision model 10 has not been exposed to during its initial training, in order to reduce a potential bias. Moreover, this step is particularly effective in cases where the series of images 14 includes numerous superfluous images, as it allows to quickly eliminate unwanted images with little or no relation to the detection objective defined by the operational context.

For instance, if the computer vision model 10 has been initially trained based on a dataset with only morning situations having good lighting, the context-based filtering step 22 could be used to keep only images that have been acquired during the afternoon or during night.

Another advantage lies in the fact that this step allows to specifically discard images that are not relevant with regard to a task that the computer vision model 10 needs to perform.

As an example, if the series of images 14 has been acquired at an airport, it is likely to include sets of images that do not contain individuals. If the computer vision model 10 is intended to detect individuals in a scene, said sets that do not contain individuals are superfluous. Consequently, in this case, the predetermined operational context is "presence of individuals in the scene shown in the image", and the VQA model 16 is configured to determine whether each image of the series of images 14 shows at least one individual or not.

### Semantics-based filtering step 24

Advantageously, the processing unit 8 is also configured to provide, during the semantics-based filtering step 24, the series of images 14 (which may have been updated during context-based filtering step 22) as input to the clustering algorithm 18.

Such clustering algorithm 18 has been configured to compute, for each image of an input series of images, a corresponding embedding in a predetermined vector space, which is usually a high dimensional space where the vectors represent features of the images. More precisely, for each image, the corresponding embedding computed by the clustering algorithm 18 is representative of a semantic meaning of a scene shown in said image.

Furthermore, the clustering algorithm 18 is configured to perform clustering of the computed embeddings in corresponding clusters. In this case, each cluster comprises embeddings associated with images that are semantically related to one another.

By "images semantically related to one another", it is meant, in the context of the present invention, images having embeddings that are closer than a predetermined threshold distance, based to a predetermined metric (such as a norm in the vector space, or a cosine similarity).

For instance, the number of clusters has been previously set by an operator. Alternatively, the clustering algorithm 18 is adapted to automatically determine the number of clusters. In the latter case, the clustering algorithm 18 is, for instance, HDBSCAN (Hierarchical Density-Based Spatial Clustering of Applications with Noise) or a Gaussian mixture model.

According to another example, the clustering algorithm 18 is CLIP, as described by Alec Radford et al. in the digital prepublication "Learning Transferable Visual Models From Natural Language Supervision", referenced arXiv:2103.00020.

Moreover, the processing unit 8 is configured to select at least one image from at least one cluster based on a predetermined selection rule.

Preferably, the selection rule includes selecting each image so that a distribution of the selected images complies with (*i.e*., matches) a predetermined distribution, preferably the distribution of the images of the series of images 14 across the determined clusters. In the latter case, the distribution of the selected images matches the distribution of the images of the series of images 14 across the clusters.

Alternatively, the selection rule includes selecting an image from each cluster, such as a medoid of the cluster.

The processing unit 8 is also configured to update the series of images 14 based on each selected image. For instance, the updated series of images is obtained by retaining only the selected images and discarding the others.

This step is advantageous, as it allows to preserve the changes that may be observed in the series of images 14. Indeed, within a single series of images, the images may have notable changes that can significantly impact the learning process. For example, a series of images captured over a 24-hour period may exhibit variations in the environment, such as changes in weather, time of day, and population density.

Consequently, the semantics-based filtering step 24 allows to provide an updated series of images that retains the same semantical distribution (*e.g*., represented scenes, attributes of the objects, spatial relationships, weather, time of day, population density) as the initial series of images.

Preferably, the semantics-based filtering step 24 is performed after the context-based filtering step 22. However, a situation where the context-based filtering step 22 is performed after the semantics-based filtering step 24 can be envisaged.

### Detection-based filtering step 26

The processing unit 8 is configured to provide, during the detection-based filtering step 26, each image of the current series of images 14 as input to the computer vision model 10.

More precisely, for each image, an output of the computer vision model 10 is representative of each object detected by the computer vision model 10 in said image.

Furthermore, the processing unit 8 is configured to provide the current series of images 14 to the optical flow algorithm 12. More precisely, the processing unit 8 is configured to provide, to the optical flow algorithm 12, each image of the current series of images 14 in association with the previous image in the initial video sequence (even if said previous image has been removed from the series of images 14 during the context-based filtering step 22 or the semantics-based filtering step 26).

For instance, the optical flow algorithm 12 is RAFT, described by Zachary Teed et al. in the digital prepublication "RAFT: Recurrent All-Pairs Field Transforms for Optical Flow", referenced arXiv:2003.12039. Such algorithm in configured to estimate the motion of objects, surfaces, or edges within a sequence of images or video frames. It achieves this by analyzing the apparent movement of pixel intensities between consecutive frames (*i.e*., images), identifying the direction and velocity of motion at each point in the image.

More precisely, an output of the optical flow algorithm 12 is representative of each moving object detected by said optical flow algorithm 12 in the series of images 14.

Moreover, the processing unit 8 is configured to compare the output of the computer vision model 10 to the output of the optical flow algorithm 12.

In this case, the processing unit 8 is configured to identify, based on a result of the comparison, each image of the series of images 14 that comprises a moving object that has been detected by the optical flow algorithm 12 but has not been detected by the computer vision model 10.

Such identification is preferably done using a logic comparison on the pixels of the objects detected by each of the computer vision model 10 and the optical flow algorithm 12.

For instance, if the computer vision model 10 is an object detection model, segmentation is first performed on an output of said computer vision model 10. More precisely, for each object detected by the computer vision model, the corresponding bounding box is provided to a segmentation algorithm to compute the associated segmentation mask.

In this case, the aforementioned comparison comprises comparing the output of the optical flow algorithm 12 with the segmentation masks of the objects detected by the computer vision model 10, to determine whether each segmentation mask overlaps with a moving object detected by the optical flow algorithm. This allows us to check for the absence of common pixels, which could indicate a detection problem.

For instance, the segmentation algorithm is a segmentation model such as the Segment Anything Model (SAM), described by Alexander Kirillov et al. in the digital prepublication "Segment Anything", referenced arXiv:2304.02643.

Furthermore, the processing unit 8 is configured to write each identified image in the image set 19.

### Training step 28

Advantageously, the processing unit 8 is further configured to train, during the training step 28, the computer vision model 10 based on the obtained image set 19.

In this case, the image set 19 has been previously annotated, either by a human operator or using an automatic approach, for instance using an artificial intelligence model.

### Operation

Operation of the computing system 2 will now be disclosed with reference to figures 1 and 2.

### Context-based filtering step 22

Advantageously, during the context-based filtering step 22, the processing unit 8 provides each series of images 14 as input to the VQA model 16, in order to identify each image in said series of images which has a content that does not satisfy a predetermined operational context.

Moreover, the processing unit 8 updates the series of images 14 based on an output of the VQA model 16, preferably by removing each identified image from the series of images 14.

### Semantics-based filtering step 24

Advantageously, during the semantics-based filtering step 24, the processing unit 8 provides the current series of images 14 (which may have been updated during context-based filtering step 22) as input to the clustering algorithm 18.

Consequently, the clustering algorithm 18 computes, for each image of the input series of images, a corresponding embedding in a predetermined vector space, each embedding being representative of a semantic meaning of a scene shown in said image.

Furthermore, the clustering algorithm 18 performs clustering of the computed embeddings in corresponding clusters.

Moreover, the processing unit 8 selects at least one image from at least one cluster based on a predetermined selection rule.

Then, the processing unit 8 update the series of images 14 based on each selected image. For instance, the updated series of images is obtained by retaining only the selected images and discarding the others.

### Detection-based filtering step 26

Then, during the detection-based filtering step 26, the processing unit 8 provides each image of the current series of images 14 as input to the computer vision model 10 and to the optical flow algorithm 12.

Moreover, the processing unit 8 compares the output of the computer vision model 10 to the output of the optical flow algorithm 12, and identifies, based on a result of the comparison, each image of the series of images 14 that comprises a moving object that has been detected by the optical flow algorithm 12 but has not been detected by the computer vision model 10.

Furthermore, the processing unit 8 writes each identified image in the image set 19.

### Training step 28

Advantageously, during the training step 28, the processing unit 8 further trains the computer vision model 10 based on the obtained image set 19.

In this case, the image set 19 is first annotated, so as to that, for each image of the image set 19 provided as input to the computer vision model 10, the corresponding annotation forms an expected output for said image.

Of course, the invention is not limited to the examples detailed above.

## Claims

1. **A** computer-implemented method (20) for selecting images in a series of images (14), the method comprising a detection-based filtering step (26) including:
- for each image of the series of images (14), providing said image to a computer vision model (10), an output of the computer vision model (10) being representative of each object detected by said computer vision model (10) in said image;
- for each image of the series of images (14), providing said image and a respective previous image to an optical flow algorithm (12), an output of the optical flow algorithm (12) being representative of each moving object detected by said optical flow algorithm (12) in said image;
- comparing the output of the computer vision model (10) to the output of the optical flow algorithm (12);
- based on a result of the comparison, identifying each image of the series of images (14) that comprises a moving object that has been detected by the optical flow algorithm (12) but has not been detected by the computer vision model (10); and
- storing each identified image in an image set (19).

2. The method according to claim 1, wherein the computer vision model is an object detection model, the step of comparing comprising:
- for each object detected by the computer vision model (10), performing segmentation of the image based on a respective bounding box output by said computer vision model (10), so as to compute a corresponding segmentation mask;
- determining whether the computed segmentation mask overlaps with a moving object detected by the optical flow algorithm.

3. The method according to claim 1 or 2, further comprising, prior to the motion-based filtering step, a semantics-based filtering (24) step including:
- providing the series of images (14) as input to a clustering algorithm (18) configured to:
• compute, for each image of an input series of images, a corresponding embedding in a predetermined vector space, each embedding being representative of a semantic meaning of a scene shown in said image;
• perform clustering of the computed embeddings, each cluster comprising embedding associated with images that are semantically related to one another;
- selecting at least one image from at least one cluster based on a predetermined selection rule; and
- updating the series of images (14) based on each selected image.

4. The method according to claim 3, wherein the selection rule includes selecting each image so that a distribution of the selected images matches a distribution of the images across the determined clusters.

5. The method according to any one of claims 1 to 4, further comprising, prior to the detection-based filtering step, a context-based filtering step (22) including:
- using a visual question answering model (16), identifying each image of the series of images (14) showing a scene that does not correspond to a predetermined operational context;
- updating the series of images (14) by removing each identified image.

6. The method according to any one of the claims 1 to 5, further comprising training the computer vision model based on the image set (19).

7. Computer program comprising instructions, which when executed by a computer, cause the computer to carry out the steps of the method according to any one of claims 1 to 6.

8. Computing system (2) for selecting images in a series of images (14), the computing system (2) being configured to:
- for each image of the series of images (14), provide said image to a computer vision model (10), an output of the computer vision model (10) being representative of each object detected by said computer vision model (10) in said image;
- for each image of the series of images (14), provide said image and a respective previous image to an optical flow algorithm (12), an output of the optical flow algorithm (12) being representative of each moving object detected by said optical flow algorithm (12) in said image;
- compare the output of the computer vision model (10) to the output of the optical flow algorithm (12);
- based on a result of the comparison, identify each image of the series of images (14) that comprises a moving object that has been detected by the optical flow algorithm (12) but has not been detected by the computer vision model (10); and
- store each identified image in an image set (19).
